# EUROPÄISCHE PATENTSCHRIFT

(11) **EP 1 227 949 B1**
(45) Veröffentlichungstag und Bekanntmachung des Hinweises auf die Patenterteilung: **04.11.2009**
(21) Anmeldenummer: 00967728.7
(22) Anmeldetag: 21.09.2000
(51) Int. Cl.: B60L 11/18, B60L 15/20

(54) **VORRICHTUNG ZUR ELEKTRISCHEN ENERGIEERZEUGUNG MIT EINER BRENNSTOFFZELLE IN EINEM FAHRZEUG UND VERFAHREN ZUM BETRIEB EINER DERARTIGEN VORRICHTUNG**
DEVICE FOR GENERATING ELECTRIC ENERGY IN A MOTOR VEHICLE BY MEANS OF A FUEL CELL AND METHOD FOR OPERATING SUCH A DEVICE
DISPOSITIF DE PRODUCTION D'ENERGIE ELECTRIQUE AVEC UNE CELLULE ELECTROCHIMIQUE DANS UN VEHICULE ET PROCEDE PERMETTANT D'EXPLOITER LEDIT DISPOSITIF

(30) Priorität: 11.11.1999 DE 19954306
(43) Veröffentlichungstag der Anmeldung: 07.08.2002
(73) Patentinhaber: NuCellSys GmbH, 73230 Kirchheim/Teck-Nabern (DE)
(72) Erfinder: ABERLE, Markus, 73265 Dettingen (DE); SONNTAG, Josef, 73230 Kirchheim (DE)
(74) Vertreter: JENSEN & SON
(86) Internationale Anmeldenummer: PCT/EP2000/009233
(87) Internationale Veröffentlichungsnummer: WO 2001/034424

(56) Entgegenhaltungen:
- DE-A- 19 617 548
- DE-A- 19 731 250
- DE-A- 19 810 468
- FR-A- 2 771 863
- US-A- 5 166 584
- US-A- 5 625 272

## Beschreibung

Die Erfindung bezieht sich auf eine Vorrichtung zur elektrischen Energieerzeugung mit einer Brennstoffzelle in einem Fahrzeug, das wenigstens einen Antriebsmotor aufweist, der über einen Umrichter mit der Brennstoffzelle verbindbar ist, der Hilfsaggregate für die Startphase und den Dauerbetrieb nach der Startphase zugeordnet sind, und auf eine Verfahren zum Betrieb einer derartigen Vorrichtung.

Es ist bereits eine Schaltungsanordnung zur elektrischen Energieversorgung eines eine Brennstoffzelle und eine Akkumulatorschaltung enthaltenden Netzes vorgeschlagen worden, in dem der Akkumulator während des Startvorgangs die Energie liefert (DE 198 104 685). Die Akkumulatorschaltung ist bei dieser Anordnung über einen oder mehrere DC/DC-Wandler an das Brennstoffzellennetz angeschlossen, mit dem auch die Antriebe von Hilfsaggregaten wie einem Kompressor zur Förderung des Brennmittels und/oder von Luft verbunden sind. Zu Beginn eines Startvorgangs liefert der Akkumulator die Energie für die Hilfsaggregate. Im Anschluß an den Startvorgang, also im Nennbetrieb, wird der Akkumulator über den DC/DC-Wandler aufgeladen.

Bekannt ist ein Verfahren zum Starten eines Brennstoffzellen-Fahrzeugs, das von einer elektrischen Antriebseinheit, die von der Brennstoffzelle gespeist wird, angetrieben wird. Das Brennstoffzellenfahrzeug enthält eine Brennstoffzelle, der über eine Leitung, in der ein Ventil und ein Druckregler angeordnet sind, ein Brennmittel, z.B. Wasserstoff, zugeführt wird. Über eine weitere Leitung, in der ein Luftfilter, eine Luftmassenmesser und eine Kompressor angeordnet sind, wird der Brennstoffzelle ein Oxidant, z. B. Luft, zugeführt. Zum Antrieb des Kompressors sind ein von einer Starterbatterie von 12 V gespeister elektrischer Anlassermotor und ein weiterer für die Spannung der Brennstoffzelle ausgelegter Elektromotor vorgesehen. Zum Start der Brennstoffzelle wird der Anlassermotor von der Starter-Batterie mit Strom versorgt. Im Normalbetrieb liefert die Brennstoffzelle die zum Betrieb des weiteren Elektromotors nötige Energie. Durch einen Stromsteller wird die Drehzahl des Elektromotors und damit die des Kompressors zur Beeinflussung des Oxidanten-Massenstroms eingestellt um die Leistung der Brennstoffzelle zu beeinflussen (DE 43 22 767 A1) .

Bei höheren Antriebsleistungen des Fahrzeugs ist eine entsprechend bemessene Brennstoffzelle erforderlich, deren Hilfs- bzw. Zusatzaggregate in der Startphase ebenfalls große Leistungen benötigen. Bei Verwendung einer 12 V Starterbatterie muß diese daher große Ströme in der Startphase abgeben, was sich ungünstig für den Ladezustand und auch die Lebensdauer auswirkt. Die großen Ströme benötigen überdies große Leiterquerschnitte. Bei von Brennstoffzellen mit elektrischer Energie versorgten Fahrzeugen ist es erwünscht, diese rekuperativ zu Bremsen. Eine herkömmliche Starterbatterie von 12 V kann jedoch die rückgespeiste Energie nur zum Teil aufnehmen, so daß ein großer Teil der Energie in Wärme umgesetzt werden muß. Hierdurch verschlechtert sich der Gesamtwirkungsgrad des Brennstoffzellensystems.

Aus der DE 197 31 250 A1 sind ein Energieversorgungssystem mit Brennstoffzellenstapel, Speicherbatterie, Antriebsmotor und Hilfsmaschinerie und ein Verfahren zum Aufladen der Speicherbatterie bekannt. Die Speicherbatterie ist über einen Schaltkontakt mit dem Brennstoffzellenstapel verbunden. Die Hilfsmaschinerie ist über einen DC/DC-Wandler an den Brennstoffzellenstapel und an die Speicherbatterie angeschlossen. Der Antriebsmotor ist über einen Schaltkontakt mit dem Brennstoffzellenstapel und der Speicherbatterie verbunden. Eine Restladungserfassungseinrichtung dient der Erfassung der Restladung der Speicherbatterie mittels Spannungs- oder Strommessung. Beim Starten des Energieversorgungssystems geben sowohl Speicherbatterie als auch Brennstoffzellenstapel elektrische Leistung an eine Belastung ab, bis das Aufwärmen des Brennstoffzellenstapels abgeschlossen ist.

Eine steigende Anzahl elektrischer Verbraucher in modernen Kraftfahrzeugen führt zu einem steigenden Bedarf an elektrischer Leistung, dem eine Vorrichtung zur Erzeugung elektrischer Energie gerecht werden muss. Insbesondere die Anzahl der leistungsstarker Niedervolt-Verbraucher nimmt ständig zu. Bordnetz und Energieversorgung bzw. -verteilung im Bordnetz müssen entsprechend angepasst werden. Des weiteren ist die Fahrbereitschaft auch bei Ausfall der primären Energiequelle, das heisst bei Ausfall der Brennstoffzelle zu gewährleisten.

Der Erfindung liegt das Problem zugrunde, eine Vorrichtung zur Erzeugung elektrischer Energie mit einer Brennstoffzelle und mit den für den Start und den Dauerbetrieb der Brennstoffzelle notwendigen Hilfs- bzw. Zusatzaggregaten weiterzuentwickeln, durch die eine im Fahrzeugbordnetz mit Verbrauchern wie Lampen vorhandene Speicherbatterie in der Startphase der Brennstoffzelle entlastet wird und durch die das aus der Brennstoffzelle und ihren Hilfs- bzw. Zusatzaggregaten bestehende Brennstoffzellensystem in den verschiedenen Betriebszuständen des Fahrzeugs, insbesondere auch bei Teillast des Fahrzeugantriebs, im Leerlauf oder beim Bremsen gegebenenfalls bis zum Stillstand des Fahrzeugs, einen hohen Wirkungsgrad hat, und durch die eine zur schnellen Beschleunigung des Fahrzeugs erforderliche Leistung zusätzlich zur Brennstoffzellenleistung verfügbar ist. Weiterhin besteht das von der Erfindung zu lösende Problem darin, ein Verfahren für den Betrieb einer solchen Vorrichtung anzugeben.

Das Problem wird bei einer Vorrichtung der eingangs beschriebenen Art erfindungsgemäß dadurch gelöst, daß der Umrichter und Hilfs- bzw. zusatzaggregate für das Starten und den Betrieb der Brennstoffzelle sowie eine Seite eines bidirektionalen DC/DC-Wandlers über wenigstens einen Schaltkontakt mit den elektrischen Ausgängen der Brennstoffzelle verbindbar sind, daß an die andere Seite des DC/DC-Wandlers über wenigstens einen weiteren Schaltkontakt ein elektrischer Energiezwischenspeicher anschließbar ist, und dass die eine Seite wenigstens eines weiteren, zweiten bidirektionalen DC/DC-Wandlers über den Schaltkontakt mit elektrischen Ausgängen der Brennstoffzelle verbindbar ist, und die andere Seite des zweiten DC/DC-Wandlers mit einem Bordnetz verbunden ist, dessen Spannung kleiner als die Nennspannung der Brennstoffzelle ist und in dem ein zweiter Energiezwischenspeicher angeordnet ist. Der Schaltkontakt ist außerhalb eines Verbindungspfades von erstem Energiezwischenspeicher zu Antriebsmotor angeordnet wobei die Freigabe des Energieflusses über den zweiten DC/DC-Wandler und die Energieflußrichtung über den zweiten DC/DC-Wandler in Abhängigkeit vom Betriebszustand der Brennstoffzelle und des ersten und/oder des.zweiten Energiezwischenspeichers von einem Steuergerät gesteuert werden kann, und wobei die Freigabe des Energieflusses über den ersten DC/DC-Wandler und die Energieflußrichtung über den ersten DC/DC-Wandler in Abhängigkeit vom Betriebszustand des zweiten Energiespeichers von einem Steuergerät gesteuert werden kann.

Vom Energiezwischenspeicher, der eine entsprechende Kapazität hat, können die Hilfsaggregate für den Start der Brennstoffzelle in der Startphase mit Energie versorgt werden. Der Energiefluß verläuft dann bei geschlossenem Schaltkontakt zwischen Energiezwischenspeicher und DC/DC-Wandler in Richtung der Hilfsaggregate. Nach der Startphase wird der den Ausgängen der Brennstoffzelle nachgeschaltete Schaltkontakt geschlossen. Die Startphase ist beendet, wenn die Brennstoffzelle ihre vorgesehene Betriebsspannung erreicht hat. Dieser Zustand kann vom Steuergerät festgelegt werden, das die Schließung des Schaltkontakt zwischen den Ausgängen der Brennstoffzelle und den weiteren, an des Brennstoffzellennetz angeschlossenen Verbrauchern wie Zusatz-aggregate, Umrichter sowie dem DC/DC-Wandler bewirkt. In diesem Schaltzustand kann bei Umkehr der Stromflußrichtung im DC/DC-Wandler der Energiezwischenspeicher entweder von der Brennstoffzelle oder vom Umrichter im Bremsbetrieb des Fahrzeugs aufgeladen werden . Die Ladung des Energiezwischen-speichers kann zur Aufnahme eines Teils der elektrischen Energie aus der Brennstoffzelle zweckmäßig sein, wenn der Antrieb im Teillastbetrieb arbeitet, von der Brennstoffzelle aber zur Erzielung eine hohen Wirkungsgrads eine höhere Leistung abgegeben wird. Im Bremsbetrieb wird die vom Umrichter des Antriebs zurückgespeiste Energie dem Energiezwischenspeicher zugeführt. Wenn die vom Fahrzeugantrieb be-nötigte Leistung sehr schnell abfällt, was z. B. beim raschen Übergang vom Fahrbetrieb in den Stillstand geschieht, kann die Brennstoffzelle zur Ausnutzung des Brenngases langsamer auf eine geringe Leistung zurückgeführt werden, wobei die vom Antrieb nicht mehr benötigte Energie in den Energiezwischen-speicher eingeleitet wird. Der Schaltkontakt ist insbesondere Bestandteil eines Batterieschutzschalters z. B. Schaltschützes, das mit dem Steuergerät verbunden ist.

Bei einer bevorzugten Ausführungsform ist zwischen mindestens einem elektrischen Ausgang der Brennstoffzelle und dem Schalter eine bezüglich der Polarität der Ausgangsspannung bei Nennbetrieb der Brennstoffzelle in Durchlaßrichtung gepolte Diode angeordnet. Die Reihenschaltung zwischen Schalter und Diode ist beliebig, d. h. die Diode kann auch hinter dem Schalter angeordnet sein.Die Diode verhindert, daß Strom aus dem Netz, an das der Umrichter und der DC/DC-Wandler angeschlossen sind, in die Brennstoffzelle eingespeist wird. Mit der Diode läßt sich auf besonders einfache Weise die Rückspeisung in die Brennstoffzelle vermeiden.

Es ist zweckmäßig, wenn zwischen dem einen elektrischen Anschluß des Energiezwischenspeichers und einem Eingang des DC/DC-Wandlers der Schaltkontakt parallel mit einer Reihenschaltung eines weiteren Schaltkontakts und eines Widerstands angeordnet sind, wobei die beiden Schaltkontakte durch das Steuergerät betätigbar und Schützoder Relaiskontakte sind. Die Reihenschaltung aus Schalter und Widerstand wird vor dem parallel liegenden Schalter eingeschaltet, um den Einschalt-stromstoß des DC/DC-Wandler klein zu halten.

Zwischen dem zweiten elektrischen Anschluß des Energiezwischenspeichers und Masse, an die jeweils ein Anschluß des DC/DC-Wandlers und der Hilfsantrieb sowie des Fahrumrichters gelegt ist, ein vom Steuergerät betätigbarer Schalter angeordnet ist. Dieser Schalter, der zum Schutz des Energiezwischenspeichers vorgesehen ist, ist im Stillstand des Fahrzeugs offen.

Vorzugsweise sind beide elektrische Ausgänge der Brennstoffzelle über je einen Schalter mit dem den Fahrumrichter enthaltenden Netz verbunden, wobei die Schalter vom Steuergerät jeweils für sich betätigbar sind.

Als Energiezwischenspeicher ist insbesondere eine Blei-Säure-Batterie, eine Nickel-Cadmium-Batterie, eine Nickel-Metallhydrid-Batterie, eine Lithium-Ionen-Batterie oder eine Lithium-Polymerbatterie vorgesehen.

Als Energiezwischenspeicher kann auch ein Doppelschichtkondensator oder ein Super- bzw. Ultrakondensator eingesetzt werden (Die Lebensdauer des Betriebs derartiger Energiezwischen-speicher ist nicht von Ladezyklen abhängig).

Es ist zweckmäßig, wenn Sensoren, insbesondere zur Messung der Spannung und der Temperatur des Energiezwischenspeichers, vorgesehen und als Teilnehmer an einem Bus mit dem Steuergerät verbunden sind. Wenn im Fahrzeug bereits ein Datenbus vorhanden ist, können die Sensoren oder eine mehrere Sensoren für den Energiezwischenspeicher umfassende Einheit bzw. Baugruppe mit diesem Bus verbunden sein.

Bei einer weiteren günstigen Ausführungsform sind der bidirektionale DC/DC-Wandler und wenigstens ein weiterer bidirektionaler DC/DC-Wandler, der mit dem von der Brennstoff-zelle gespeisten Netz und mit einem Bordnetz verbunden ist, dessen Spannung kleiner als die Nennspannung der Brennstoff-zelle ist, in einem gemeinsamen Gehäuse angeordnet. Die beiden DC/DC-Wandler können eine Versorgungsspannung, z. B. die Spannung des Bordnetz von 12 V, und eine Kühlmediumsversorgung gemeinsam nutzen. Auch die Kommunikationsschnittstelle zum Bus, z. B. einem CAN-Bus, kann für beide Wandler gemeinsam sein.

Vorzugsweise sind auch die Schalter zwischen dem Energiezwischenspeicher und dem DC/DC-Wandler sowie das Steuergerät im Gehäuse angeordnet.

Zweckmäßig ist es, die beiden DC/DC-Wandler, die Kühlung für diese Wandler, das Steuergerät mit wenigstens einem Mikrocon-troller, die Strommeßeinrichtung und die Komponenten für die Energiezwischenspeicherüberwachung in einem Gehäuse zu einer funktionellen Einheit anzuordnen, die die Anschlüsse zu den anderen elektrischen Bauteilen aufweist.

Ein Verfahren zum Betrieb einer Vorrichtung zur elektrischen Energieerzeugung mit einer Brennstoffzelle in einem Fahrzeug, das wenigstens einen Antriebsmotor aufweist, der über einen Umrichter mit der Brennstoffzelle verbunden ist, der Hilfsaggregate für die Startphase und den Dauerbetrieb nach der Startphase zugeordnet sind, wobei der Umrichter, und Hilfs- und Zusatzaggregate für das Starten und den Betrieb der Brennstoffzelle sowie eine Seite eines bidirektionalen DC/DC-Wandlers an die elektrischen Ausgänge über wenigstens einen Schaltkontakt der Brennstoffzelle anschaltbar sind, und wobei an die andere Seite des DC/DC-Wandlers über wenigstens einen weiteren Schaltkontakt ein Energiezwischenspeicher anschließ-bar ist, der mit einem Steuergerät verbunden ist, besteht erfindungsgemäß darin, daß die brennstoffzellenseitige Spannung und die energiezwischenspeicherseitige Spannung gemessen werden, daß beim Laden des Energiezwischenspeichers ein minimaler brennstoffzellenseitiger Spannungswert, ein brennstoffzellenseitiger Sollstrom, ein maximaler energiezwischenspeicherseitiger Spannungswert und ein maximaler energiezwischenspeicherseitiger Strom vorgegeben und überwacht werden, daß beim Erreichen des minimalen brennstoffzellen-seitigen oder des maximalen energiezwischenspeicherseitigen Spannungswerts oder des brennstoffzellenseitigen Sollstroms oder des energiespeicherseitigen Maximalstroms der Ladestrom des DC/DC-Wandlers zur Vermeidung des Unterschreitens des minimalen oder Überschreitens des maximalen Spannungswerts und des Überschreitens des Sollstroms oder des maximalen Strom reduziert wird, daß beim Entladen des Energiezwischenspeichers ein maximaler brennstoffzellenseitiger Spannungswert, der brennstoffzellenseitige Sollstrom, ein energiezwischenspeicherseitiger minimaler Spannungswert und ein energiezwischenspeicherseitiger Spannungswert und ein energiezwischenspeicherseitiger maximaler Stromwert vorgegeben und überwacht werden, und daß beim Erreichen des maximalen brenn-stoffzellenseitigen Spannungswerts oder des Sollstroms oder des energiespeicherseitigen maximalen Stromwerts der Ent-ladestrom des Energiezwischenspeichers durch den DC/DC-Wandler derart reduziert wird, daß der maximalen Spannungswert nicht über- und der minimale Spannungswert nicht unterschritten und der Sollstrom oder der maximale Strom nicht überschritten werden. Mit den vorstehend beschriebenen Verfahrenschritten wird verhindert, daß die Brennstoffzelle zu stark belastet wird, d. h. eine zu geringe Ausgangsspannung hat, und daß die Spannung an den Verbrauchern unzulässig hoch wird. Zugleich wird verhindert, daß der Energiezwischenspeicher auf eine seine Funktionsfähigkeit beeinträchtigen Spannung absinkt oder einen unzulässigen hohen Strom abgibt oder mit einer unzulässig hohen Spannung beaufschlagt wird.

Bei einer bevorzugten Ausführungsform ist vorgesehen, daß bei Erreichen bzw. Unterschreiten des minimalen brennstoffzellenseitigen Spannungswerts oder eines vorgegebenen darüber-liegenden höheren Spannungswerts der DC/DC-Wandler auf End-lademodus eingestellt wird, in dem der Strom in das mit der Brennstoffzelle verbundene Netz eingespeist wird, daß bei Erreichen bzw. Überschreiten des maximalen brennstoffzellen-seitigen Spannungswerts oder eines unterhalb dieses Spannungs-werts liegenden, vorgegebenen Spannungswerts der DC/DC-Wandler auf Lademodus eingestellt wird, bei dem Strom aus dem mit der Brennstoffzelle verbundenen Netz in den Energiezwischenspeicher eingespeist wird, und daß bei einer zwischen dem minimalen und dem maximalen vorgegeben Spannungswert liegender Spannung der Brennstoffzelle der DC/DC-Wandler inaktiv ist. Mit dem vorstehend angegebenen, automatisch ausgeführten Verfahren wird die Spannung an den Verbrauchern unabhängig vom jeweiligen Betriebszustand des Fahrzeugs, z. B. dem Antriebs-, Bremsbetrieb oder Leerlauf, innerhalb der vorgegebenen Grenzen gehalten, um ein sicheres Arbeiten der Verbraucher zu gewährleisten. Der Energie-zwischenspeicher nimmt z. B. die beim Bremsen vom Traktions-antrieb im Generatorbetrieb rückgespeiste Energie auf. Bei ansteigenden Leistungsbedarf gibt der Energiezwischenspeicher Energie an die Verbraucher ab. Bei einem Lastabwurf nimmt der Energiezwischenspeicher Strom von der Brennstoffzelle auf.

Zum Starten der oben beschriebenen, erfindungsgemäßen Vorrichtung wird zuerst der Energiezwischenspeicher durch Schließen des Schalters mit dem DC/DC-Wandler verbunden, der die Energie für die Hilfs- bzw. Zustandsaggregate zur Verfügung stellt, die an das mit seinem Ausgang verbundene Netz angeschlossen sind, wobei die Brennstoffzelle durch die Hilfs- bzw. Zustandsaggregate in Gang gesetzt wird. Gibt die Brennstoffzelle die vorgesehene Spannung ab, wird der Schalter am Ausgangs der Brennstoffzelle geschlossen.

Insbesondere wird zu Beginn der Startphase der in Serie mit dem Widerstand angeordnete Schalter angeschlossen, danach wird der zwischen dem anderen Ausgang des Energiezwischenspeichers und Masse angeordnete Schalter geschlossen, anschließend wird der parallel zu dem Schalter mit dem Widerstand liegende Schalter geschlossen und nach dessen Schließung der Schalter in Reihe mit dem Widerstand geöffnet, im Anschluß daran werden die Hilfs- bzw. Zusatzaggregate für die Brennstoffzelle eingeschaltet und ein zwischen dem Brennstoffzellenausgang und Masse angeordneter Schalter geschlossen, worauf nach Erreichen der Leerlaufspannung der Brennstoffzelle der andere Schalter geschlossen wird.

Bei Unterbrechung des Vorlade- bzw. Startvorgangs wird der Schalter zwischen Masse und dem einen Ausgang des Energiezwischenspeichers geöffnet, bevor der mit dem Widerstand in Reihe liegende Schalter geöffnet wird.

Die Erfindung wird im folgenden an Hand eines in einer Zeichnung dargestellten Ausführungsbeispiels näher beschrieben, aus dem sich weiter Einzelheiten, Merkmale und Vorteile ergeben.

Es zeigen:
- Fig. 1: eine Vorrichtung zur elektrischen Energieerzeugung mit einer Brennstoffzelle und einem Energiezwischen-speicher in einer mobilen Einrichtung im Blockschalt-bild,
- Fig. 2: einen Teil einer Vorrichtung zur elektrischen Energieerzeugung mit einer Brennstoffzelle und einem Energiezwischenspeicher in einem Fahrzeug mit in einem Gehäuse angeordneten DC/DC-Wandlern und Steuer- und Schaltbauteilen im Blockschaltbild.

Eine nicht näher bezeichnete mobile Einrichtung, insbesondere ein Fahrzeug, enthält eine elektrischen Antriebsmaschine 1, die im Bremsbetrieb auch als Generator arbeitet. Bei der elektrischen Maschine 1 kann es sich um eine Gleichstrom-maschine oder eine Drehstrommaschine wie Synchron- oder Asynchronmaschine handeln. Die Maschine 1 ist über eine nicht näher bezeichnete Welle über ein Differentialgetriebe 2.mit nicht näher bezeichneten Antriebsrädern des Fahrzeugs verbunden. Als Antriebselemente können auch Radnasenmotoren verwendet werden.

Ein Fahrumrichter bzw. Umrichter 3 ist an die Klemmen der Maschine 1 angeschlossen. Die gleichstromseitigen Eingänge des Fahrumrichters 3 sind an ein Gleichstromnetz angeschlossen, das auch im folgenden BrennstoffzellenZwischenkreis genannt wird. Eine mit einem Eingang des Fahrumrichters 3 verbundene Leitung 4 des Gleichstromnetzes verläuft zu einem Pol eines Schaltkontakts 5, eines Batterieschutzschalters z. B. eines Schaltschützes, dessen anderer Pol mit der Kathode einer Diode 6 verbunden ist, deren Anode an den einen elektrischen Ausgang 7 einer Brennstoffzelle 8 angeschlossen ist, bei der es sich insbesondere um eine PEM-Brennstoffzelle handelt. Eine weitere Leitung 9 des Gleichstromnetzes ist mit dem anderen gleich-stromseitigen Eingang des Fahrumrichters 3 und einem Pol eines zweiten Schaltkontakts 10 verbunden, dessen anderer Pol an den anderen elektrischen Ausgang 11 der Brennstoffzelle 8 gelegt ist. Der Schaltkontakt 10 ist insbesondere ebenfalls ein Schützkontakt.

Der Brennstoffzelle 8 sind eine Reihe von Hilfs- und Zusatzaggregaten für die Startphase und den Betrieb zugeordnet. Eines dieser Aggregate ist z. B. ein Kompressor 12, der für die Luftzufuhr zur Brennstoffzelle 8 vorgesehen ist. Der Brenn-stoffzelle wird weiterhin von einer Reformiereinrichtung 13 Brenngas zugeführt. Die Reformiereinrichtung steht über ein Ventil 14 mit einem Brennstofftank 15 in Verbindung. Es können auch noch weitere, nicht dargestellt Hilfs- und Zusatzaggregate wie z. B. eine Kühlwasserpumpe und dgl. vorhanden sein. Die Schaltgeräte für die Hilfs- und Zusatzaggregate sind in der Zeichnung schematisch mit einem Block 16 bezeichnet, von dem aus Leitungen 17, 18 zu den Hilfs- und Zusatzaggregaten verlaufen. Die Schaltgeräte gemäß dem Block 16 sind an das Gleichstromnetz bzw. die Leitungen 4, 9 des Gleichstromnetzes angeschlossen. Die Leitung 9 ist hierbei an Masse bzw. Fahrzeugmasse gelegt.
Ein DC/DC-Wandler 19 für bidirektionalen Betrieb ist auf einer Seite mit dem Gleichstromnetz verbunden, d. h. ein Aus/Eingang 20 des DC/DC-Wandler 19 ist an die Leitung 4 bzw. einen Pol des Schaltkontakts 5 angeschlossen.

Ein zweiter Ein/Ausgang 21 auf der anderen Wandlerseite ist mit einem Pol eines Schalters 22 und einem Widerstand 23 verbunden. Der Widerstand 23 ist in Reihe mit einem Schalter 24 oder Relais angeordnet. Der andere Pol des Schalters 22 und ein Pol des Schalters 24 sind mit einem Anschluß 25 eines Energiezwischenspeichers 26 verbunden, bei dem es sich um einen Akkumulator, insbesondere eine Blei-Säure-Batterie, eine Nickel-Cadium-Batterie, eine Nickel-Metallhydrid-Batterie, eine Lithium-Ionen-Batterie, eine Lithium-Polymerbatterie, oder einen Kondensator, insbesondere Doppelschicht-, Super- oder Ultrakondensator, handelt. Der zweite Anschluß 27 des Energiezwischenspeichers 26 ist über einen Schalter 30 an Masse ebenso wie eine weiterer, den Ein/Ausgängen 20, 21 gemeinsamer Anschluß des DC/DC-Wandlers gelegt und damit auch an die Leitung 9 angeschlossen.

Der DC/DC-Wandler 19 hat intern nicht näher dargestellte Meßwandler zur Messung der Ströme und Spannungen sowohl auf der der Brennstoffzelle 8 als auch auf der dem Energiezwischenspeicher 26 zugewandten Seite. Der Zwischenspeicher 26 ist mit einer Datenerfassung- und Übertragungseinheit 28 verbunden, die an Sensoren zur Messung der Spannungen und Temperaturen des Energiezwischenspeichers 26 angeschlossen ist. Die Sensoren messen z. B. die Gesamtspannung und die Temperatur eines Moduls einer Batterie.

An das Gleichstromnetz mit den Leitungen 4, 9 ist ein weiterer DC/DC-Wandler 32 mit einer Seite angeschossen. Die andere Seite des DC/DC-Wandlers 32 steht mit einem Akkumulator 33 in Verbindung. Der Akkumulator 33 mit z. B. 12 V Nennspannung ist Teil eines Bordnetzes, das eine Reihe von elektrischen Ver-brauchern wie Scheibenwischermotore, Lampen, Blinkleuchten, Fensterhebermotore usw. enthält. Dieses Bordnetz und die in diesem angeordneten Verbraucher sind nicht näher dargestellt. Über den DC/DC-Wandler 32 kann das Bordnetz mit elektrischer Energie aus dem Brennstoffzellennetz versorgt werden, um den Akkumulator zu laden und/oder die Verbraucher zu speisen. Es ist auch eine Energieabgabe vom Bordnetz in das Hochvoltnetz der Brennstoffzelle möglich.

Ein Steuergerät 29 enthält Programme zur Betätigung des Fahrumrichters 3, der Hilfs- und Zusatzaggregate, der Schalter 5, 10, 22, 24, 30 zur Steuerung und Regelung des DC/DC-Wandlers 19 und des DC/DC-Wandler 32 und zur Verarbeitung der Meßwerte der Temperaturen und Spannungen des Energiezwischen-speichers 26 und der Spannungen des Bordnetzes, an den Ausgängen 25, 26 bzw. den Ein/Ausgängen 20, 21 des DC/DC-Wandlers 19 und den Anschlüssen der Brennstoffzelle 8 sowie der über den DC/DC-Wandler 19 und 32 fließenden Ströme und des von der Brennstoffzelle 8 abgegebenen Stroms. Das Steuergerät ist insbesondere mit einem Bus 31 verbunden, an den die zu betätigenden Schalter, die zu steuernden Einheiten wie Fahrumrichter 3 und die DC/DC-Wandler 19 und 32, die Datener-fassungs- und -übertragungseinheit 28 und z. B. weitere Einheiten wie Hilfs- und Zusatzaggregate als Teilnehmer angeschlossen sind. Der Bus ist insbesondere ein CAN-Bus.

Die Diode 6 verhindert schädliche Rückströme in die Brennstoffzelle.

Die Schalter 22 und 30 haben die Aufgabe als Schutzschalter den Energiezwischenspeicher vom DC/DC-Wandler zu trennen.

Der Vorwiderstand 23 zusammen mit dem z. B. als Relais ausgebildeten Schalter 24 ermöglichen ein schonendes Vorladen der internen Kapazitäten des DC/DC-Wandlers. Da die über den Widerstand 23 fließenden Ströme gering sind, reicht ein Relais für die Stromführung aus.

Die Batterie-Daten-Erfassungs-Anordnung 28 erfaßt Spannungen und Temperaturen der Batterie z. B. die Gesamtspannung eines Moduls sowie die Temperatur eines Moduls und sendet die erfaßten Daten über den fahrzeuginternen Datenbus z. B. CAN-Bus.

Der DC/DC-Wandler dient als Interface zwischen Energiezwischenspeicher und dem Brennstoffzellen-DC-Netz, indem er die Spannung des Energiezwischenspeichers der des Brennstoffzellen-DC-Netzes anpaßt.

Über den DC/DC-Wandler werden die Hilfsantriebe bzw. - aggregate während der Startphase aus dem Energiezwischenspeicher betrieben.

Der Energiezwischenspeicher 26 kann beim Bremsen anfallende Energie aufnehmen. Hierzu wird der Traktionsantrieb zum Generator und speist elektrische Energie in das Brennstoffzellen-DC-Netz. Aus diesem speist der DC/DC-Wandler 19 in den Energiezwischenspeicher 26.

Bei ansteigendem Leistungsbedarf z. B. zur Beschleunigung des Fahrzeugs, kann der DC/DC-Wandler 19 aus dem Energiezwischenspeicher 26 zusätzliche Leistung zur momentan verfügbaren Brennstoffzellenleistung den Antrieben zur Verfügung stellen und somit die Dynamik des Stromerzeugungssystems erhöhen.

Während einem Lastabwurf kann überschüssige Leistung aus der Brennstoffzelle 8 über den DC/DC-Wandler 19 in den Energiezwischenspeicher verschoben werden.

Die Ansteuerung des DC/DC-Wandlers 19 nimmt das fahrzeuginterne Steuergerät 29 über das fahrzeuginterne Bussystem z. B. CAN vor.

Der DC/DC-Wandler 19 bildet mit dem Energiezwischenspeicher 26 und seiner Peripherie (z. B. Batteriemanagement, Batterieschutzschalter usw.) das Energiezwischenspeichersystem (EZS):

Die Brennstoffzelle 8 wird durch folgende Verfahrensschritte gestartet:
1. Schließen des Schalters 24 bzw. Relais.
2. Schließen des Batterieschutzschalters 30.
3. Die internen Kapazitäten des DC/DC-Wandler werden während einer vorgebbaren Zeitdauer über den Widerstand 23 vorgeladen.
4. Nach dem Vorladen wird der Batterieschutzschalter 22 geschlossen.
5. Ist der Batterieschutzschalter 22 geschlossen, und es kann der Schalter 24 bzw. das Relais K1 geöffnet werden.
6. Der DC/DC-Wandler 19 lädt die Kapazitäten des Brennstoffzellenzwischenkreises so daß die Hilfsantriebe anlaufen können und eingeschaltet werden, um das Brennstoffzellensystem zu starten.
7. Wird die Brennstoffzelle 8 ausreichend mit Brenngasen (z. B. Luft aus einem Kompressor und wasserstoffreiches Gas aus einem Reformierungsprozeß) versorgt, so baut sie (nach einer gewissen Zeit) eine Spannung auf.
8. Der Batterieschutzschalter mit dem Schaltkontakt 10 wird geschlossen und die Leerlaufspannung der Brennstoffzelle 8 gemessen.
9. Der DC/DC-Wandler 19 hebt die Spannung des Brennstoffzellen-Zwischenkreises auf die Leerlaufspannung der Brennstoffzelle 8 an. Stimmen die gemessene Leerlaufspannung der Brennstoffzelle 8 und die Spannung des Zwischenkreises überein wird auch der Schaltkontakt 5 geschlossen. Damit ist der Startvorgang beendet und das Brennstoffzellensystem geht in Nennbetrieb über.

Es kann ein Abschalten während des Vorladens, das zum Startvorgang gehört bzw. diesem vorausgeht, gewünscht und wie folgt ausgeführt werden:

Muß während des Startvorgangs (Während des Schritts 3) abgeschaltet werden, so wird zuerst der Batterieschutzschalter 30 geöffnet und erst kurz darauf das Relais 24 geöffnet.

Das hat den Vorteil, daß das Relais 24 nicht für das Trennen des Vorladestroms ausgelegt werden muß. Das Relais muß lediglich den Vorladestrom führen können, und im geöffneten Zustand eine sichere Isolation darstellen.

Der Schalter 30 hingegen muß auch im Fehlerfall den Stromkreis sicher trennen können, und somit mit einer Vorrichtung zur Löschung des beim Schalten von Gleichstrom auftretenden Lichtbodens versehen sein.
Die oben beschriebene Vorrichtung kann in 2 Betriebsarten bzw. Modi arbeiten, die im folgenden mit I-Modus und Automatikmodus bezeichnet sind:

### 1. I-Modus

Im I-Modus wird dem DC/DC-Wandler 19 ein Strom vom Brennstoffzellenzwischenkreis vorgegeben und zusätzlich ein Signal "Laden" oder "Entladen". Diese beiden Signale bestimmen somit die Stromrichtung. Ist das Signal "Laden" vorgegeben, so wird der Energiezwischenspeicher 26 geladen, d. h. es fließt ein Strom in den Energiezwischenspeicher 26. Beim "Entladen" fließt ein Strom aus dem Energiezwischenspeicher 26. Da die Spannung an diesem stets positiv ist, so entspricht die Stromflußrichtung stets auch der Energieflußrichtung. Im I-Modus werden beim "Laden" folgende Grenzwerte der Spannung bzw. des Strom vorgegeben:
- Ubmin: Minimal-Spannung brennstoffzellenseitig
- Ib: Sollstrom brennstoffzellenseitig
- Uzmax: Maximalspannung energiezwischenspeicherseitig
- Iz: Maximalstrom energiezwischenspeicherseitig

Wird beim "Laden" einer dieser Grenzwerte tangiert, so reduziert der DC/DC-Wandler 19 automatisch den Strom. Damit wird verhindert, daß die Brennstoffzelle 8 vom DC/DC-Wandler 19 so stark belastet wird, daß ihre Spannung unter Ubmin fällt.

Ein Überschreiten der zulässigen Spannung wird am Energiezwischenspeicher 26 vom Wandler 19 selbst verhindert, ebenso das Überschreiten eines zulässigen Strom am Speicher 26.

Im I-Modus gelten beim " Entladen" analog folgende Grenzwerte:
- Ubmax: Maximal Spannung brennstoffzellenseitig
- Ib: Sollstrom brennstoffzellenseitig
- Uzmin: Minimalspannung energiezwischenspeicherseitig
- Iz: Maximalstrom energiezwischenspeicherseitig

Wird beim "Laden" einer dieser Grenzwerte tangiert, so reduziert der DC/DC-Wandler automatisch den Strom. Damit wird verhindert, daß die Spannung im Brennstoffzellenkreis einen zulässigen Wert überschreitet. Ein Unterschreiten der zulässigen Spannung am Energiezwischenspeicher z. B. einer Mindestspannung, wird so vom Wandler 19 selbst verhindert, ebenso wie das Überschreiten eines zulässigen Stromes am Zwischenspeicher 26.

Im Automatikmodus wird dem DC/DC-Wandler 19 ein Spannungsfenster für den Brennstoffzellenkreis vorgegben:
- Ubmin: Minimal-Spannung brennstoffzellenseitig
- Ubmax: Maximal-Spannung brennstoffzellenseitig

Steigt die Spannung im Brennstoffzellenkreis über die mit Ubmax vorgegebene Grenze, so schaltet der DC/DC-Wandler 19 automatisch auf "Lademodus", speist also Strom aus dem Brennstoffzellenkreis in den Energiezwischenspeicher 26.

Sinkt die Spannung im Brennstoffzellenkreis über die mit Ubmin vorgegebene Grenze, so schaltet der DC/DC-Wandler 19 automatisch auf "Entlademodus", speist Strom aus dem Energiezwischenspeicher 26 in den Brennstoffzellenkreis und stützt somit die Spannung im Brennstoffzellenkreis.

Der Automatikmodus ist speziell für den Betrieb mit einem Brennstoffzellensystem ausgelegt. Es können so automatisch Spannungseinbrüche z. B. bei Lastanforderungen als auch Spannungserhöhungen z. B. beim rekuperativen Bremsen ausgeregelt werden.

Auch im Automatikmodus gelten die Grenzen
- Uzmin: Minimalspannung energiezwischenspeicherseitig
- Uzmax: Maximalspannung energiezwischenspeicherseitig
- Ib: Sollstrom wird zu Maximalstrom brennstoffzellen-seitig
- Iz: Maximalstrom energiezwischenspeicherseitig

Ist die Spannung im Brennstoffzellenkreis zwischen Ubmin und Ubmax, so ist der DC/DC-Wandler 19 inaktiv.

### Strommessung

Für die oben beschriebene Regelung hat der DC/DC-Wandler 19 intern Meßwandler, um Ströme und Spannungen sowohl zellenbrennstoffseitig als auch am Speicher 26 messen zu können. Die hier aufgenommenen Meßwerte, insbesondere die der Strommessung können auch andern Teilnehmern am fahrzeuginternen Bussystem zur Verfügung gestellt werden z. B. zur Ermittlung des Coulombmetrischen Ladezustands des Energiezwischen-speichers 26 in einem Batteriemanagementsystem (BMS). Der Coulombmetrische Ladezustand einer Batterie wir durch Integration des Stroms des Speichers 26 ermittelt.

Sowohl der Ladestrom als auch der Entladestrom des DC/DC-Wandlers 19 können innerhalb vorgegebener Grenzen beliebig (quasi analog) vorgegeben werden. Im DC/DC-Wandler 19 sind die oben beschriebenen Grenzwerte für Maximalspannung, Minimal-spannung und Maximalstrom sowohl für die Eingangsseite als auch für die Ausgangsseite in einem nichtflüchtigen Speicher, z. B. einem Flash-Eprom abgelegt. Die Vorrichtung kann einfach an verschiedene Energiezwischenspeichersysteme (verschiedene Speichertechnologien z. B. verschiedene Batteriesysteme wie Blei-Säure-Batterie, Nickel-Cadium-Batterie, Nickel-Metallhydrid-Batterie, Lithium-Ionen-Batterie, Lithium-Polymerbatterie) und Kondensatoren angeschlossen werden mit verschiedenen Spannungsniveaus, Ladecharakteristiken. Die Lade-/Entlade Strategie ist softwaremäßig im fahrzeuginternen Steuergerät 29 hinterlegt.

Die oben beschriebene Vorrichtung hat den Vorteil, daß bei ansteigenden Leistungsbedarf, z. B. zur Beschleunigung des Fahrzeugs, zusätzlich zur momentan verfügbaren Brennstoffzellen-leistung den Antrieben Leistung aus einem Energiezwischen-speicher zur Verfügung steht. Darüberhinaus ist der Betrieb des Brennstoffzellensystems bei hohen Wirkungsgraden möglich. Insbesondere bei geringen Leistungen weist ein Brennstoff-zellensystem mit Hilfsantrieben einen geringeren Wirkungsgrad auf als an seinem Nennauslegungspunkt. Der Gesamtwirkungsgrad des Stromerzeugungssystems kann dadurch angehoben werden, daß bei geringem Leistungsbedarf das Brennstoffzellsystem dennoch bei höherer Leistung betrieben wird, und die zusätzlich produ-zierte Leistung vom Energiezwischenspeicher 26 gespeichert wird. Die gespeicherte Energie kann für Beschleunigungs-vorgänge oder den Betrieben von Hilfsantrieben z. B. beim Starten des Brennstoffzellensystems genutzt werden.

Soll die Leistung des Brennstoffzellensystems sehr schnell verringert werden, z. B. weil der Verkehr stockt, so stehen im Brennstoffzellensystem noch Brenngase zur Verfügung, die von der Brennstoffzelle in elektrischen Strom umgewandelt werden können. Der Strom wird, sofern nicht von den Antrieben benötigt, im Energiezwischenspeicher gespeichert.

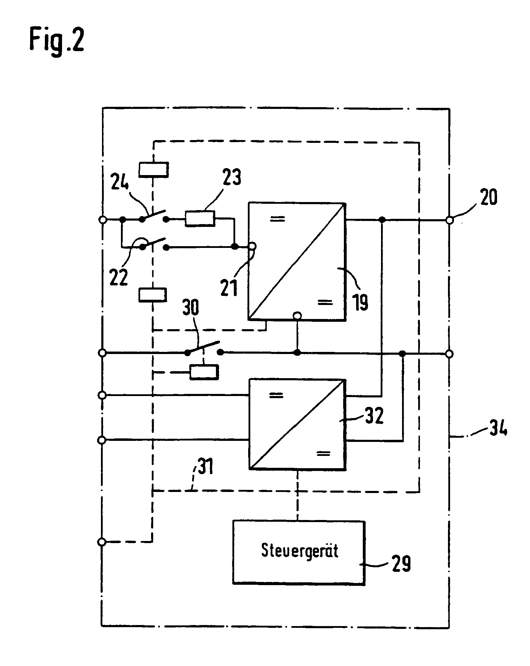

Der DC/DC-Wandler 19 für das Energiezwischenspeichersystem ist mit dem DC/DC-Wandler 32, der die Spannung des Brennstoffzellensystems auf die Spannung des Bordnetzes von z. B. 12 V tiefsetzen kann, bei einer zweckmäßigen Ausführungs-form in einem Gehäuse 34 integriert. Das Gehäuse 34 ist in Fig. 2 stichpunktiert dargestellt.

Durch die Integration von zwei oder auch mehreren Wandlern ergibt sich der Vorteil, daß die internen Einzelwandler die Versorgungen wie z. B. 12 V Versorgungsspannung und Kühlmediumversorgung (flüssig oder gasförmig) und die Kommunikationsschnittstelle zum Fahrzeugsteuergerät, z. B. über CAN, gemeinsam nutzen können.

Zu den DC/DC-Wandlern 19, 32 können auch die für den Energie-zwischenspeicher 26 notwendigen Batterieschutzschalter wie 22, 24 und 36 sowie deren Ansteuerungselektronik im gemeinsamen Gehäuse 34 untergebracht sein.

Die für den Energiezwischenspeicher 26 notwendigen Batterie-schutzschalter sowie deren Ansteuerungselektronik können in Verbindung mit der Vorladeschaltung zur Vorladung der internen Kapazitäten, in das Gehäuse 34 integriert sein.

Es steht dabei nicht nur das Gehäuse 34 sondern das Zusammen-fassen der Komponenten Battery Monitoring, Interface, Batterieschutzschalter, Strommessung, DC/DC-Wandler 19, 32, Kühleinrichtung, Steuergerät 29 mit Mikrocontroller und elektrischer sowie mechanischer Anschlüsse zu einer funktionellen Einheit im Vordergrund.

Durch den integrierten DC/DC-Wandler entsteht gegenüber zwei oder mehreren einzelnen Wandlern ein wesentlicher Gewichts-, Volumen- und Konstruktionsvorteil.

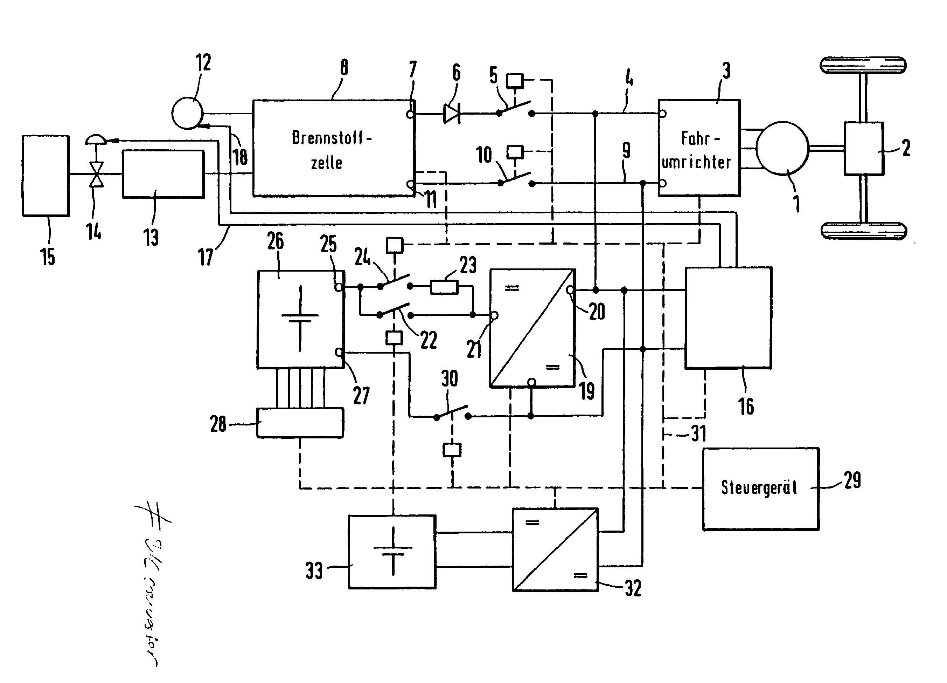

In Fig. 2 ist nur das Gehäuse 34 mit seinen Bauteilen darge-stellt. Gleiche Bauteile bei der in Fig. 1 und 2 dargestellten Vorrichtung sind mit den gleichen Bezugsziffern versehen. Die Verbindung der in Fig. 2 dargestellten Bauteile im Gehäuse-inneren zu den anderen Bauteilen ist die gleiche wie in Fig. 1 und deshalb in Fig. 2 nicht dargestellt.

## Patentansprüche

1. Vorrichtung zur elektrischen Energieerzeugung mit einer Brennstoffzelle (8) in einem Fahrzeug mit einem Antriebsmotor (1), einem Umrichter (3) und Hilfs- bzw. Zusatzaggregaten (12, 14, 16) für die Startphase und den Dauerbetrieb nach der Startphase, wobei die Hilfs- bzw. Zusatzaggregate (12, 14, 16) sowie eine Seite eines ersten bidirektionalen DC/DC-Wandlers (19) über wenigstens einen Schaltkontakt (5) mit elektrischen Ausgängen (7, 11) der Brennstoffzelle (8) verbindbar sind, wobei ein Steuergerät (29) vorgesehen ist, das die Freigabe des Energieflusses über den ersten DC/DC-Wandler (19) und die Energieflußrichtung über den ersten DC/DC-Wandler (19) in Abhängigkeit vom Betriebszustand der Brennstoffzelle (8) und des ersten Energiezwischenspeichers (26) steuert, wobei
der Antriebsmotor (1) über den Umrichter (3) mit der Brennstoffzelle (8) verbindbar ist, wobei der Umrichter (3) über den Schaltkontakt (5) mit elektrischen Ausgängen (7, 11) der Brennstoffzelle (8) verbindbar ist, daß an die andere Seite des ersten DC/DC-Wandlers (19) über wenigstens einen weiteren Schaltkontakt (22) ein erster Energiezwischenspeicher (26) anschließbar ist, dass die eine Seite wenigstens eines weiteren, zweiten bidirektionalen DC/DC-Wandlers (32) über den Schaltkontakt (5) mit elektrischen Ausgängen der Brennstoffzelle (8) verbindbar ist, daß die andere Seite des zweiten DC/DC-Wandlers (32) mit einem Bordnetz verbunden ist, dessen Spannung kleiner als die Nennspannung der Brennstoffzelle (8) ist und in dem ein zweiter Energiezwischenspeicher (33) angeordnet ist, daß der Schaltkontakt (5) außerhalb eines Verbindungspfades von erstem Energiezwischenspeicher (26) zum Antriebsmotor (1) angeordnet ist, daß die Freigabe des Energieflusses über den zweiten DC/DC-Wandler (32) und die Energieflußrichtung über den zweiten DC/DC-Wandler (32) in Abhängigkeit vom Betriebszustand der Brennstoffzelle (8) und des ersten und/oder des zweiten Energiezwischenspeichers (26, 33) von einem Steuergerät (29) gesteuert werden kann, und daß die Freigabe des Energieflusses über den ersten DC/DC-Wandler (19) und die Energieflußrichtung über den ersten DC/DC-Wandler (19) in Abhängigkeit vom Betriebszustand des zweiten Energiespeichers (33) von einem Steuergerät (29) gesteuert werden kann.

2. Vorrichtung nach Anspruch 1,
**dadurch gekennzeichnet,**
**daß** zwischen mindestens einem elektrischen Ausgang (7) der Brennstoffzelle (8) und dem Schaltkontakt (5) eine bezüglich der Polarität des Ausgangsstroms bei Nennbetrieb der Brennstoffzelle (8) in Durchlaßrichtung gepolte Diode angeordnet ist.

3. Vorrichtung nach Anspruch 1 oder 2,
**dadurch gekennzeichnet,**
**daß** zwischen dem einen elektrischen Anschluß (25) des ersten Energiezwischenspeichers (26) und einem Eingang des ersten DC/DC-Wandlers (19) der Schaltkontakt (22) parallel zu einer Reihenschaltung eines weiteren Schalters (24) und eines Widerstand (23) angeordnet ist, und
**daß** die Schalter (22, 24) durch das Steuergerät (29) betätigbar sind.

4. Vorrichtung nach zumindest einem der vorhergehenden Ansprüche,
**dadurch gekennzeichnet,**
**daß** zwischen dem zweiten elektrischen Anschluß (27) des ersten Energiezwischenspeichers (26) und Masse, an die jeweils ein Anschluß des ersten DC/DC-Wandlers (19) und der Hilfsantriebe (16) sowie der Umrichter (3) gelegt ist, ein vom Steuergerät (29) betätigbarer Schalter (30) angeordnet ist.

5. Vorrichtung nach zumindest einem der vorhergehenden Ansprüche, **dadurch gekennzeichnet, daß** beide elektrischen Ausgänge (7, 11) der Brennstoffzelle (8) über je einen Schaltkontakt (5, 10) mit dem den Umrichter (3) enthaltenden Netz verbunden sind, und daß die Schaltkontakte (5, 10) vom Steuergerät (29) jeweils für sich betätigbar sind.

6. Vorrichtung nach zumindest einem der vorhergehenden Ansprüche,
**dadurch gekennzeichnet,**
**daß** der erste Energiezwischenspeicher (26) eine Blei-Säure-Batterie, eine Nickel-Cadmium-Batterie, eine Nickel-Metallhydrid-Batterie, eine Lithium-Ionen-Batterie oder eine Lithium-Polymerbatterie ist.

7. Vorrichtung nach zumindest einem der Ansprüche 1 bis 5,
**dadurch gekennzeichnet,**
**daß** der erste Energiezwischenspeicher (26) ein Doppelschichtkondensator oder ein Super- oder Ultrakondensator ist.

8. Vorrichtung nach zumindest einem der vorhergehenden Ansprüche,
**dadurch gekennzeichnet,**
**daß** Sensoren zur Messung der Spannung und der Temperatur des ersten Energiezwischenspeichers (26) vorgesehen und als Teilnehmer an einem Bus (31) mit dem Steuergerät (29) verbunden sind.

9. Vorrichtung nach zumindest einem der vorhergehenden Ansprüche,
**dadurch gekennzeichnet,**
**daß** ein Steuer- und Regelprogramm für den Betrieb der Brennstoffzelle (8), des ersten und des zweiten DC/DC-Wandlers (19, 32), der Hilfsaggregate (16) und des Energiezwischenspeichers (26) in einem nichtflüchtigen Speicher enthalten ist.

10. Vorrichtung nach zumindest einem der vorhergehenden Ansprüche,
**dadurch gekennzeichnet,**
**daß** der erste bidirektionale DC/DC-Wandler (19) und der zweite bidirektionale DC/DC-Wandler (32) in einem gemeinsamen Gehäuse (34) angeordnet sind.

11. Vorrichtung nach Anspruch 10,
**dadurch gekennzeichnet,**
**daß** die Schalter zwischen dem ersten Energiezwischenspeicher (26) und dem ersten DC/DC-Wandler (19) sowie das Steuergerät (29) im Gehäuse (34) angeordnet sind.

12. Vorrichtung nach Anspruch 10 oder 11, **dadurch gekennzeichnet, daß** die im Gehäuse (34) angeordneten DC/DC-Wandler (19, 32) und das Steuergeräte (29) gemeinsam an eine Versorgungsspannung angeschlossen sind, daß die DC/DC-Wandler (19, 32) eine gemeinsame Kühlmittelversorgung aufweisen und daß das Gehäuse (34) eine Kommunikationsschnittstelle zum Bus (31) hat.

13. Verfahren zum Betrieb einer Vorrichtung zur elektrischen Energieerzeugung mit einer Brennstoffzelle in einem Fahrzeug, das wenigstens einen Antriebsmotor aufweist, der über einen Umrichter mit der Brennstoffzelle verbunden ist, der Hilfsaggregate für die Startphase und den Dauerbetrieb nach der Startphase zugeordnet sind, wobei der Umrichter, Hilfs- und Zusatzaggregate für das Starten und den Betrieb der Brennstoffzelle und eine Seite eines bidirektionalen DC/DC-Wandlers an die elektrischen Ausgänge der Brennstoffzelle anschaltbar sind, und wobei an die andere Seite des DC/DC-Wandlers über wenigstens einen Schalter ein Energiezwischenspeicher angeschlossen ist, der mit einem Steuergerät verbunden ist, **dadurch gekennzeichnet, daß** die brennstoffzellenseitige Spannung und die energiezwischenspeicherseitige Spannung gemessen werden, daß beim Laden des Energiezwischenspeichers ein minimaler brennstoffzellenseitiger Spannungswert, ein brennstoff-zellenseitiger Sollstrom, ein maximaler energiezwischen-speicherseitiger Spannungswert und ein maximaler energie-zwischenspeicherseitigen Strom vorgegeben und überwacht werden, daß beim Erreichen des minimalen brennstoffzellenseitigen oder des maximalen energiezwischenspeicherseitigen Spannungswerts oder des brennstoffzellenseitigen Sollstroms oder des energiespeicherseitigen Maximalstroms der Ladestrom des DC/DC-Wandlers zur Vermeidung des Unter-schreitens des minimalen oder Überschreitens des maximalen Spannungswerts und des Überschreitens des Sollstroms oder des maximalen Stroms reduziert wird, daß beim Entladen des Energiezwischenspeichers ein maximaler brennstoffzellen-seitiger Spannungswert, der brennstoffzellenseitige Soll-strom, ein energiezwischenspeicherseitiger minimaler Spannungswert und ein energiezwischenspeicherseitiger maximaler Stromwert vorgegeben und überwacht werden und daß beim Erreichen des maximalen brennstoffzellenseitigen Spannungswerts oder des minimalen energiezwischenspeicher-seitigen Spannungswerts oder des Sollstroms oder des energiespeicherseitigen maximalen Stromwerts der Entladestrom des Energiezwischenspeichers durch den DC/DC-Wandler derart reduziert wird, daß der maximalen Spannungswert nicht über- und der minimale Spannungswert nicht unterschritten und der Sollstrom oder der maximale Strom überschritten werden.

14. Verfahren nach Anspruch 13, **dadurch gekennzeichnet, daß** bei Erreichen bzw. Unterschreiten der minimalen brennstoffzellenseitigen Spannungswerts oder eines vorgegebenen darüberliegenden höheren Spannungswerts der DC/DC-Wandler auf Endlademodus eingestellt wird, in dem der Strom in das mit der Brennstoffzelle verbundene Netz eingespeist wird, daß bei Erreichen bzw. Überschreiten des maximalen brennstoffzellenseitigen Spannungswerts oder eines unterhalb dieses Spannungswerts liegenden, vorgegebenen Spannungs-werts der DC/DC-Wandler auf Lademodus eignestellt wird, bei dem Strom aus der mit der Brennstoffzelle verbundenen Netz in den Energiezwischenspeicher eingespeist wird, und daß bei einer zwischen der minimalen und dem maximalen vorgegebenen Spannungswert liegender Spannung der Brennstoffzelle der DC/DC-Wandler inaktiv ist.

15. Verfahren nach Anspruch 13 oder 14, **dadurch gekennzeichnet, daß** zum Starten der Brennstoffzelle zuerst der Energiezwischenspeicher durch Schließen des Schalters mit dem DC/DC-Wandler verbunden wird, der die Energie für die Hilfs- bzw. Zusatzaggregate zur Verfügung stellt, die an das mit seinem Ausgang verbundene Netz angeschlossen sind, daß die Brennstoffzelle durch die Hilfs- bzw. Zusatzaggregate in Gang gesetzt und daß nach Erreichen der vorgesehenen Ausgangsspannung der Brennstoffzelle der Schalter vor dem Ausgang der Brennstoffzelle geschlossen wird.

## Claims

1. Device for generating electric energy by means of a fuel cell (8) in a vehicle with a drive motor (1), an inverter (3) and auxiliary or supplementary assemblies (12, 14, 16) for the starting phase and for continuous operation after the starting phase, wherein the auxiliary or supplementary assemblies (12, 14, 16) and one side of a first bi-directional DC/DC converter (19) can be connected via at least one switch contact (5) to electric outputs (7, 11) of the fuel cell (8), wherein a control unit (29) is provided to control the enabling of the energy flow via the first DC/DC converter (19) and the direction of the energy flow via the first DC/DC converter (19) in dependence on the operating state of the fuel cell (8) and the first intermediate energy storage device (26), wherein the drive motor (1) can be connected to the fuel cell (8) via the inverter (3), wherein the inverter (3) can be connected to electric outputs (7, 11) of the fuel cell (8) via the switch contact (5), wherein a first intermediate energy storage device (26) can be connected to the other side of the first DC/DC converter (19) via at least one further switch contact (22), wherein one side of at least one further, second bi-directional DC/DC converter (32) can be connected to electric outputs of the fuel cell (8) via the switch contact (5), the other side of the second DC/DC converter (32) being connected to an electrical system the voltage of which is less than the nominal voltage of the fuel cell (8) and in which a second intermediate energy storage device (33) is provided, wherein the switch contact (5) is located outside a connecting path from the first intermediate energy storage device (26) to the drive motor (1), wherein the enabling of the energy flow via the second DC/DC converter (32) and the direction of the energy flow via the second DC/DC converter (32) in dependence on the operating state of the fuel cell (8) and the first and/or second intermediate energy storage device (26, 33) can be controlled by a control unit (29) and wherein the enabling of the energy flow via the first DC/DC converter (19) and the direction of the energy flow via the first DC/DC converter (19) in dependence on the operating state of the second intermediate energy storage device (33) can be controlled by a control unit (29).

2. Device according to claim 1,
**characterised in that**
a diode polarised in conducting direction with respect to the polarity of the output current in the nominal operation of the fuel cell (8) is provided between at least one electric output (7) of the fuel cell (8) and the switch contact (5).

3. Device according to claim 1 or 2,
**characterised in that**
the switch contact (22) is arranged in parallel to a series connection of a further switch (24) and a resistor (23) between one electric connection (25) of the first intermediate energy storage device (26) and an input of the first DC/DC converter (19), and **in that** the switches (22, 24) can be operated by the control unit (29).

4. Device according to any of the preceding claims,
**characterised in that**
a switch (30) which can be operated by the control unit (29) is provided between the second electric connection (27) of the first intermediate energy storage device (26) and ground, to which a connection each of the first DC/DC converter (19) and the auxiliary drives (16) and the inverter (3) are connected.

5. Device according to any of the preceding claims,
**characterised in that**
the two electric outputs (7, 11) of the fuel cell (8) are connected to the network containing the inverter (3) via switch contacts (5, 10), and **in that** the switch contacts (5, 10) can be operated individually by the control unit (29).

6. Device according to any of the preceding claims,
**characterised in that**
the first intermediate energy storage device (26) is a lead acid battery, a nickel cadmium battery, a nickel metal hydride battery, a lithium ion battery or a lithium polymer battery.

7. Device according to any of claims 1 to 5,
**characterised in that**
the first intermediate energy storage device (26) is a double-layer condenser or a super or ultra condenser.

8. Device according to any of the preceding claims,
**characterised in that**
sensors are provided for measuring the voltage and temperature of the first intermediate energy storage device (26) and are connected to the control unit (29) as users of a bus (31).

9. Device according to any of the preceding claims,
**characterised in that**
a control programme for the operation of the fuel cell (8), the first and second DC/DC converters (19, 32), the auxiliary assemblies (16) and the intermediate energy storage device (26) is provided in a non-volatile memory.

10. Device according to any of the preceding claims,
**characterised in that**
the first bi-directional DC/DC converter (19) and the second bi-directional DC/DC converter (32) are accommodated in a common housing (34).

11. Device according to claim 10,
**characterised in that**
the switches between the first intermediate energy storage device (26) and the first DC/DC converter (19) are accommodated in the housing (34).

12. Device according to claim 10 or 11,
**characterised in that**
the DC/DC converters (19, 32) in the housing (34) and the control unit (29) are jointly connected to a supply voltage, **in that** the DC/DC converters (19, 32) have a common coolant supply, and **in that** the housing (34) is provided with a communication interface to the bus (31).

13. Method for the operation of a device for generating electric energy by means of a fuel cell in a vehicle having at least one drive motor connected via an inverter to the fuel cell, to which are assigned auxiliary assemblies for the starting phase and for continuous operation after the starting phase, wherein the inverter, auxiliary and supplementary assemblies for the start and operation of the fuel cell and one side of a bi-directional DC/DC converter can be connected to the electric outputs of the fuel cell and wherein the other side of the DC/DC converter is connected via at least one switch to an intermediate energy storage device connected to a control unit, **characterised in that** the fuel cell-side voltage and the intermediate energy storage device-side voltage are measured, **in that**, in charging the intermediate energy storage device, a minimum fuel cell-side voltage value, a fuel cell-side nominal current, a maximum intermediate energy storage device-side voltage value and a maximum intermediate energy storage device-side current are preset and monitored, **in that**, when the minimum fuel cell-side voltage value or the maximum intermediate energy storage device-side voltage value or the fuel cell-side nominal current or the maximum intermediate energy storage device-side current is reached, the charging current of the DC/DC converter is reduced to prevent the undershooting of the minimum or the overshooting of the maximum voltage value and the overshooting of the nominal current or the maximum current, **in that**, in discharging the intermediate energy storage device, a maximum fuel cell-side voltage value, the fuel cell-side nominal current, a minimum intermediate energy storage device-side voltage value and a maximum intermediate energy storage device-side current are preset and monitored, and **in that**, when the maximum fuel cell-side voltage value or the minimum intermediate energy storage device-side voltage value or the nominal current or the maximum intermediate energy storage device-side current is reached, the discharge current of the intermediate energy storage device is reduced by the DC/DC converter such that the maximum voltage value is not overshot and the minimum voltage value is not undershot and the nominal or maximum current is not overshot.

14. Method according to claim 13, **characterised in that**, when the minimum fuel cell-side voltage value or a preset higher voltage value exceeding the former is reached or undershot, the DC/DC converter is switched to discharge mode, wherein the current is fed into the network connected to the fuel cell, **in that**, when the maximum fuel cell-side voltage value or a preset lower voltage value lying below the former is reached or overshot, the DC/DC converter is switched to charge mode, wherein the current is fed from the network connected to the fuel cell into the intermediate energy storage device, and **in that** the DC/DC converter is inactive at a fuel cell voltage between the minimum and maximum preset values.

15. Method according to claim 13 or 14, **characterised in that**, to start the fuel cell, the intermediate energy storage device is first connected by closing the switch to the DC/DC converter which provides the energy for the auxiliary or supplementary assemblies connected to the network which is connected to its output, **in that** the fuel cell is started by the auxiliary or supplementary assemblies, and **in that**, after the preset output voltage of the fuel cell has been reached, the switch in front of the output of the fuel cell is closed.

## Revendications

1. Dispositif de production d'énergie électrique doté d'une cellule électrochimique (8) dans un véhicule doté d'un moteur d'entraînement (1), d'un convertisseur (3) et de mécanismes auxiliaires et / ou supplémentaires (12, 14, 16) pour la phase de démarrage et le fonctionnement en continu après la phase de démarrage, les mécanismes auxiliaires et / ou supplémentaires (12, 14, 16) ainsi qu'un côté d'un premier convertisseur DC/DC bidirectionnel (19) pouvant être reliés par au moins un contact de commutation (5) aux sorties électriques (7, 11) de la cellule électrochimique (8), un dispositif de commande (29) étant prévu pour commander la libération du flux d'énergie par le premier convertisseur DC/DC (19) et le sens du flux d'énergie par le premier convertisseur DC/DC (19) en fonction de l'état de fonctionnement de la cellule électrochimique (8) et du premier accumulateur d'énergie intermédiaire (26), le moteur d'entraînement (1) pouvant être relié à la cellule électrochimique (8) par le convertisseur (3), le convertisseur (3) pouvant être relié aux sorties électriques (7, 11) de la cellule électrochimique (8) par le contact de commutation (5), un premier accumulateur d'énergie intermédiaire (26) pouvant être raccordé sur l'autre côté du premier convertisseur DC/DC (19) par au moins un autre contact de commutation (22), l'au moins un côté d'un second convertisseur DC/DC bidirectionnel (32) pouvant être relié aux sorties électriques de la cellule électrochimique (8) par le contact de commutation (5), l'autre côté du second convertisseur DC/DC (32) étant relié à un réseau de bord, dont la tension est inférieure à la tension nominale de la cellule électrochimique (8) et dans lequel est disposé un second accumulateur d'énergie intermédiaire (33), le contact de commutation (5) étant disposé à l'extérieur d'un chemin de liaison allant du premier accumulateur d'énergie intermédiaire (26) vers le moteur d'entraînement (1), un dispositif de commande (29) pouvant commander la libération du flux d'énergie par le second convertisseur DC/DC (32) et le sens du flux d'énergie par le second convertisseur DC/DC (32) en fonction de l'état de fonctionnement de la cellule électrochimique (8) et du premier et / ou du second accumulateur d'énergie intermédiaire (26, 33), un dispositif de commande (29) pouvant commander la libération du flux d'énergie par le premier convertisseur DC/DC (19) et le sens du flux d'énergie par le premier convertisseur DC/DC (19) en fonction de l'état de fonctionnement du second accumulateur d'énergie (33).

2. Dispositif selon la revendication 1 **caractérisé en ce qu'**une diode qui est polarisée dans le sens de passage par rapport à la polarité du courant de sortie lors d'un fonctionnement nominal de la cellule électrochimique (8), est disposée entre au moins une sortie électrique (7) de la cellule électrochimique (8) et le contact de commutation (5).

3. Dispositif selon la revendication 1 ou 2, **caractérisé en ce que** le contact de commutation (22) est disposé entre le raccordement électrique (25) du premier accumulateur d'énergie intermédiaire (26) et une entrée du premier convertisseur DC/DC (19) parallèlement à un montage en série d'un autre commutateur (24) et d'une résistance (23) et que le commutateur (22, 24) peut être actionné par le dispositif de commande (29).

4. Dispositif selon au moins l'une quelconque des revendications précédentes, **caractérisé en ce qu'**un commutateur (30) pouvant être actionné par le dispositif de commande (29) est disposé entre le second raccordement électrique (27) du premier accumulateur d'énergie intermédiaire (26) et la masse, sur laquelle sont placés un raccordement du premier convertisseur DC/DC (19) et l'entraînement auxiliaire (16) ainsi que le convertisseur (3).

5. Dispositif selon au moins l'une quelconque des revendications précédentes, **caractérisé en ce que** les deux sorties électriques (7, 11) de la cellule électrochimique (8) sont chacune reliées par un contact de commutation (5, 10) au réseau contenant le convertisseur (3) et **en ce que** les contacts de commutation (5, 10) peuvent être actionnés en soi par le dispositif de commande (29).

6. Dispositif selon au moins l'une quelconque des revendications précédentes, **caractérisé en ce que** le premier accumulateur d'énergie intermédiaire (26) est une batterie au plomb-acide, au nickel-cadmium, au nickel métal hybride, au lithium-ion ou au lithium polymère.

7. Dispositif selon au moins l'une des revendications 1 à 5, **caractérisé en ce que** le premier accumulateur d'énergie intermédiaire (26) est un condensateur double couche ou un super ou ultracondensateur.

8. Dispositif selon l'au moins une des revendications précédentes, **caractérisé en ce que** des capteurs destinés à mesurer la tension et la température du premier accumulateur d'énergie intermédiaire (26) sont prévus et sont reliés au dispositif de commande (29) en tant que participant à un bus (31).

9. Dispositif selon au moins une quelconque des revendications précédentes, **caractérisé en ce que** un programme de réglage et de commande pour le fonctionnement de la cellule électrochimique (8) du premier et du second convertisseur DC/DC (19, 32), des mécanismes auxiliaires (16) et de l'accumulateur d'énergie intermédiaire (26) est contenu dans une mémoire non volatile.

10. Dispositif selon l'au moins une des revendications précédentes, **caractérisé en ce que** le premier convertisseur DC/DC bidirectionnel (19) et le second convertisseur DC/DC bidirectionnel (32) sont disposés dans un boîtier commun (34).

11. Dispositif selon la revendication 10, **caractérisé en ce que** les commutateurs entre le premier accumulateur d'énergie intermédiaire (26) et le premier convertisseur DC/DC (19) ainsi que le dispositif de commande (29) sont disposés dans le boîtier (34).

12. Dispositif selon la revendication 10 ou 11, **caractérisé en ce que** les convertisseurs DC/DC (19, 32) disposés dans le boîtier (34) et le dispositif de commande (29) sont raccordés ensemble à une tension d'alimentation, que les convertisseurs DC/DC (19, 32) présentent une alimentation d'agent réfrigérant commune et que le boîtier (34) possède une interface de communication avec le bus (31).

13. Procédé de fonctionnement d'un dispositif destiné à produire de l'énergie électrique doté d'une cellule électrochimique dans un véhicule, lequel présente au moins un moteur d'entraînement, qui est relié à la cellule électrochimique par un convertisseur, les mécanismes auxiliaires étant affectés à la phase de démarrage et au fonctionnement continu après la phase de démarrage, le convertisseur, les mécanismes auxiliaires et supplémentaires pour le démarrage et le fonctionnement de la cellule électrochimique et un côté d'un convertisseur DC/DC bidirectionnel pouvant être raccordés aux sorties électriques de la cellule électrochimique, et un accumulateur d'énergie intermédiaire étant raccordé sur l'autre côté du convertisseur DC/DC par au moins un commutateur, qui est relié à un dispositif de commande, **caractérisé en ce que** la tension côté cellule électrochimique et la tension côté accumulateur d'énergie intermédiaire sont mesurées, **en ce que** lors de la charge de l'accumulateur d'énergie intermédiaire, une valeur de tension minimale côté cellule électrochimique, un courant nominal côté cellule électrochimique, une valeur de tension maximale côté accumulateur d'énergie intermédiaire et un courant maximal côté accumulateur d'énergie intermédiaire sont prédéfinis et contrôlées, **en ce que** lorsque la valeur de tension minimale côté cellule électrochimique ou la valeur de tension maximale côté accumulateur d'énergie intermédiaire ou le courant nominal côté cellule électrochimique ou le courant maximal côté accumulateur d'énergie est atteint(e), le courant de charge du convertisseur DC/DC est réduit pour éviter le dépassement vers le bas de la valeur de tension minimale ou dépassement vers le haut de la valeur de tension maximale et le dépassement vers le haut du courant nominal ou du courant maximal, **en ce que** lors de la décharge de l'accumulateur d'énergie intermédiaire, une valeur de tension maximale côté cellule électrochimique, le courant nominal côté cellule électrochimique, une valeur de tension minimale côté accumulateur d'énergie intermédiaire et une valeur de courant maximale côté accumulateur d'énergie intermédiaire sont prédéfinis et contrôlés, et que lorsque la valeur de tension maximale côté cellule électrochimique ou la valeur de tension minimale côté accumulateur d'énergie intermédiaire ou le courant nominal ou la valeur de courant maximale côté accumulateur d'énergie intermédiaire est atteint(e), le courant de décharge est réduit par le convertisseur DC/DC de manière telle que la valeur de tension maximale ne soit pas dépassée vers le haut et que la valeur de tension minimale ne soit pas dépassée vers le bas et que le courant nominal ou le courant maximal ne soit pas dépassé vers le haut.

14. Procédé selon la revendication 13, **caractérisé en ce que** lorsque la valeur de tension minimale côté cellule électrochimique ou une valeur de tension prédéfinie supérieure à celle-ci est atteinte ou dépassée vers le bas, le convertisseur DC/DC est réglé en mode de décharge, permettant au courant d'être injecté dans le réseau relié à la cellule électrochimique, lorsque la valeur de tension maximale côté cellule électrochimique ou une valeur de tension prédéfinie inférieure à cette valeur de tension est atteinte ou dépassée vers le haut, le convertisseur DC/DC est réglé en mode de charge, le courant provenant du réseau relié à la cellule électrochimique est ainsi injecté dans l'accumulateur d'énergie intermédiaire, et lorsque la tension de la cellule électrochimique se trouve entre la valeur de tension minimale et maximale prédéfinie, le convertisseur DC/DC est inactif.

15. Procédé selon la revendication 13 ou 14, **caractérisé en ce qu'**au démarrage de la cellule électrochimique, l'accumulateur d'énergie intermédiaire est d'abord relié au convertisseur DC/DC lorsque le commutateur se ferme, lequel met de l'énergie à disposition des mécanismes auxiliaires et supplémentaires, qui sont raccordés au réseau relié à sa sortie, la cellule électrochimique est actionnée par les mécanismes auxiliaires et supplémentaires, et une fois que la tension de sortie prédéfinie de la cellule électrochimique est atteinte, le commutateur se ferme avant la sortie de la cellule électrochimique.
